# EUROPEAN PATENT SPECIFICATION

(11) **EP 1 201 118 B1**
(45) Date of publication and mention of the grant of the patent: **28.12.2005**
(21) Application number: 01204161.2
(22) Date of filing: 30.10.2001
(51) Int. Cl.: A01G 29/00, A01G 31/02

(54) **Watering spike**
Bewässerungsspitze
Pointe pour l'irrigation

(30) Priority: 30.10.2000 NL 1016500
(43) Date of publication of application: 02.05.2002
(73) Proprietor: Naff B.V., 3140 AG Maassluis (NL)
(72) Inventor: Van Holstein, Petrus Simon Nicolaas Maria, 2685 ST Poeldijk (NL)
(74) Representative: van Westenbrugge, Andries

(56) References cited:
- EP-A- 0 305 622
- EP-A- 0 820 693
- US-A- 4 381 623
- US-A- 6 112 456

## Description

The present invention relates to a spike, for supplying a fluid from a pipe to a nutrient medium, such as a substrate, which spike comprises a pin-shaped body, which at a first end is provided with an aperture for attaching a pipe and at the other end tapers to form a piercing element at that end, the spike comprising a knife-shaped member that is placed in the movement path of the fluid, in order to distribute fluid over the walls of the body.

A spike of the type mentioned in the preamble is known from EP-A-0 820 693. The spike is used, for example, for supplying water and possibly nutrients from a main pipe to a nutrient medium, such as a substrate.

According to a known method, plants are raised from seed in a small quantity of substrate, also called the plug. After some time, this plug is placed in a larger block of substrate, also called the grow block. The plug, together with the grow block, is then placed on a mat, such as a rock wool mat, in order to allow the plant to develop further.

It is known to supply the nutrients, such as water, through a main pipe. Pipes of smaller diameter are connected to this main pipe. Owing to the small diameter, these smaller pipes act as so-called capillary pipes. The nutrients are forced under pressure from the main pipe through these capillary pipes. The end of the capillary pipes is fixed in a spike. The spike in turn is inserted into the substrate material. The spikes used in conjunction with a capillary pipe are also called capillary pins.

The spikes according to the prior art are designed in such a way that the nutrients, such as the water, can flow out of the outflow aperture of the capillary pipe, through the wall of the spike and into the substrate. From the outflow end of the capillary pipe the nutrient will move downwards under the influence of gravity in the direction of the tapering end by means of which the pin is inserted into the substrate. In order to ensure that the nutrients are distributed well over the substrate, the spike according to the prior art is provided with a knife-shaped member. The idea is for the flow of nutrients to be split into at least two flows of nutrient by means of the knife-shaped member.

In the prior art there is, inter alia, a spike with an angle of approximately 45° in the body. This spike comprises an aperture into which the end of a capillary pipe can be inserted. The fluid supplied through the capillary pipe can flow from the end of the pipe in the direction of a knife, which is provided at a certain distance below the aperture for attaching the pipe. The fluid will leave the outflow aperture of the capillary pipe at a certain pressure. That means that a relatively thin jet of fluid is released from the outflow aperture. In practice, there is a high risk that this thin jet of fluid will not go exactly onto the centre of the knife-shaped member. If the fluid flow does not hit the knife in the correct way, the functioning of the knife is lost. In other words, the fluid jet either flows past the knife, and misses the knife entirely, or it hits the knife on a side edge, so that the fluid flow will pass the knife as a whole on one side. In that case the envisaged object, namely splitting the fluid flow from the capillary pipe into two smaller flows in order to distribute the fluid over a relatively large area, is not achieved.

It is the object of the present invention to provide a spike of the type mentioned in the preamble, in which under normal conditions, in practice, the correct supply of the fluid flow in the direction of the knife-shaped member can be guaranteed better than is the case according to the prior art.

That object is achieved in the present invention by a spike according to claim 1.

As soon as the fluid leaves the outflow aperture of the capillary pipe, the fluid will pass into the chamber or channel, the diameter of which is greater than the internal diameter of the capillary pipe. That means that the pressure of the fluid will be able to decrease slightly. The chamber or channel is filled, and the fluid will leave the chamber or channel through the outflow aperture of said channel or chamber. The outflow of the fluid from this outflow aperture is not dependent upon the care with which the pipe is attached in the spike. Both the chamber and its outflow aperture are regular components of the spike, with a set, predictable function. By now providing a guide, in the form of a guide wall, it can further be ensured that the fluid flow leaving the outflow aperture of the channel or chamber of the spike moves in a controlled manner in the direction of the knife-shaped member.

The spike according to the invention differs from the spikes according to the prior art in that the supply of the fluid to the knife is not dependent upon the positioning of the pipe in the spike, but is determined only by elements that form an integral part of the spike.

Moreover, the spike according to the invention will function properly, irrespective of the care with which the spike is inserted into the substrate. The body of the spike must form a certain angle with the horizontal between, for example, 20° and 80°. Since the insertion of the spikes is carried out by hand, there will be a certain variation in the position of the different spikes. Despite these differences, the knife will function well in the various angular positions.

According to the invention, it is further possible for the guide wall to connect to the wall of the outflow aperture of the channel or chamber.

By this measure, it is ensured that the fluid emerging from the outflow channel is in immediate contact with the guide wall.

According to the invention, it is further possible for the body of the spike to comprise a curved part, in which case the outflow aperture of the channel or chamber is situated upstream of the curved part, and the knife-shaped member is placed downstream of the curved part. It is possible here for the guide wall to extend over the curved part.

In practice, the spikes will be used in conjunction with main pipes extending between various mats, such as rock wool mats, placed next to each other. The capillary pipes extending from the main pipe to the mats preferably remain as low down as possible, near to the surface of the mats. When work is being carried out on the plants, such as, for example, picking, it is not desirable for the capillary pipes to be removed from the mat substantially in the vertical direction. In that case a pipe could be severed during the picking. Providing a bend in the spike means that the spike can be placed in the mat substantially in the vertical direction, with the capillary pipe extending substantially in the horizontal direction in the direction of the spike. By further providing the outflow aperture at one end of the curved part and the knife at the other end, it is ensured that the fluid will be moved in the direction of the knife-shaped member under the influence of gravity, after passing the bend.

According to the invention, it is further possible for the guide wall to be placed at one end of the centre line drawn between the outflow aperture of the channel or chamber and the knife-shaped member.

A movement path for the fluid will be situated between the outflow aperture of the channel or chamber of the spike and the knife-shaped member. The wall preferably forms one of the lateral boundaries of said movement path. In other words, the wall is placed asymmetrically relative to this movement path between the outflow aperture and the knife-shaped member.

According to the invention, it is further possible for the body to be provided with guide walls, for guiding the fluid from the knife-shaped member in the direction of the piercing element. It is possible here for the spike to comprise retaining walls, for retaining the fluid flow.

The spike according to the invention is preferably used in conjunction with a substrate, such as, for example, a rock wool substrate. Owing to the presence of the guide walls in the longitudinal direction of the spike, the fluid flow is helped to flow from the top side of the spike in the direction of the piercing element on the underside of the spike.

There is, however, a risk that, through placing the spike in the substrate, the substrate will be forced aside and the fluid that is placed in the substrate with the aid of the spike will spread in the substrate from substantially the underside of the spike. Root growth and the like will also occur near the surface of the substrate. For that reason, it is advantageous for nutrients to be supplied to the substrate in particular so that they are just below the surface of the substrate. By providing the retaining walls extending crosswise, it can be ensured that the insertion depth of the fluid supplied with the spike to the substrate is limited.

The present invention will be explained further with reference to the appended figures, in which:
Fig. 1 shows a view in perspective of a grow block placed on a mat, and containing the spike according to the present invention.
Figure 2 shows in perspective and partially in cross section the top side of the spike according to the invention.
Figure 3 shows a view of the top side of the spike according to the present invention.
Figure 4 shows a cross section along the line A-A in Figure 3.

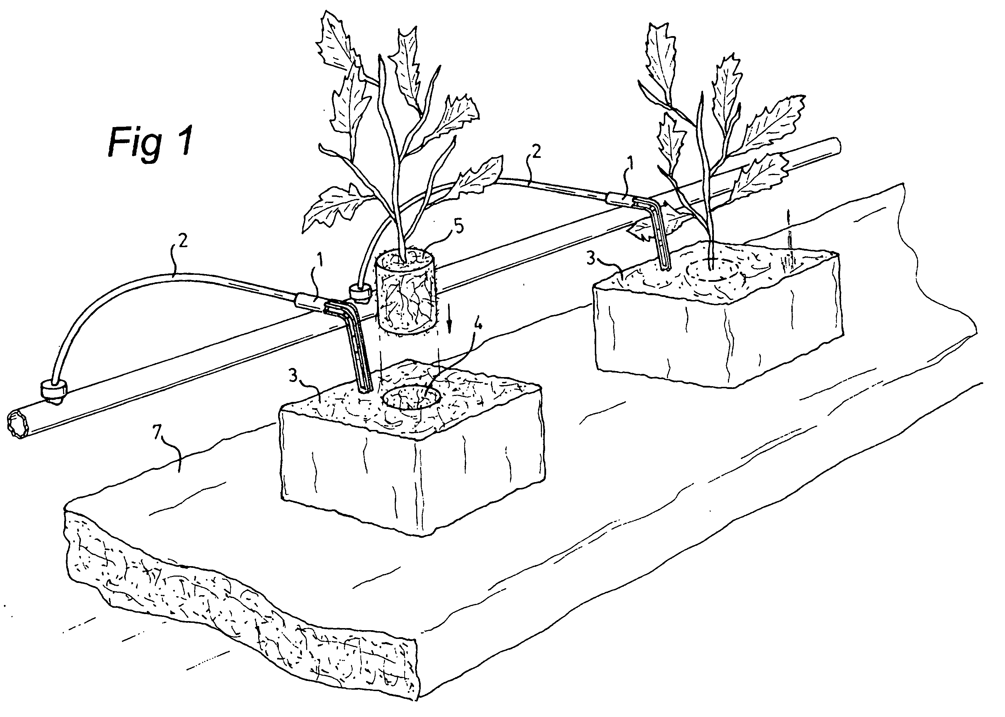

Figure 1 shows a spike 1 according to the present invention. The spike 1 is used to supply nutrients, such as water and nutrients dissolved in it, from a pipe 2 to a grow block 3. The grow block 3 is composed of a substrate, such as, for example, a rock wool. A hole 4 is made in the substrate. A so-called plug 5 can be received in this hole 4. The plug 5 can be used for raising a plant 6 from seed. The plug 5 and the grow block 3 sit together on a mat, such as a rock wool mat 7.

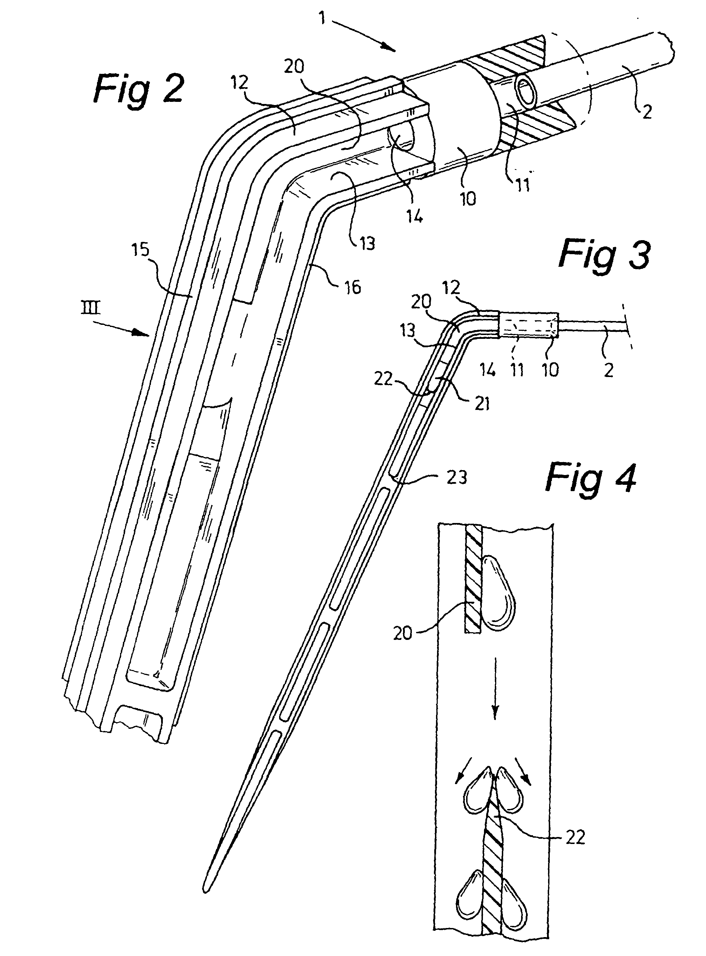

The pipe 2 will be connected to a main pipe for the nutrients (not shown). The pipe 2 is, for example, designed as a so-called capillary pipe. Under the influence of the pressure in the main pipe, the pipe 2 will receive nutrients. The specific functioning of the spike 1 will be explained further with reference to Figures 2 to 4.

It can be seen further in Figure 1 that a bend has been made in the spike 1 according to the invention. The presence of this bend means that the spike 1 can be inserted into the substrate 3 substantially in the vertical direction. At the same time, through the presence of the bend, the pipe 2 will extend substantially in the horizontal direction from the spike 1 in the direction of a main pipe. In this way it is ensured that the pipe 2 extends in a relatively flat manner above the substrate 3. When work, such as picking, has to be carried out on the plant, there is then little risk of the pipes 2 being damaged during this work.

Figure 2 shows in perspective a part of the spike 1 according to the invention. Said spike 1 comprises a head 10, in which a channel 11 is provided. Channel 11 is used for attaching the end of the pipe 2. The channel 1 can be provided on the inside with, for example, a screw thread (diagrammatically indicated by reference numeral 12), by means of which pipe 2 is retained in the channel 11. If the pipe 2 has been disconnected, for example in order to disinfect the spike, the pipe 2 can be fixed again by means of the screw thread 12. The head 10 connects to a guide wall 12 and a guide wall 13. Said guide walls 12 and 13 together form a guide channel for guiding fluid flowing out of the outflow aperture 14 of the channel 11. The guide walls 12, 13 are provided with ribs 15 and 16 respectively, which are used to increase the surface area of the outside wall of the spike 1. By increasing this surface area, the strength with which the spike 1 is retained in the substrate 3 is increased.

A guide wall 20 further extends between the walls 12 and 13.

The function of this guide wall 20 will be explained with reference to Figure 3.

Figure 3 shows a side view of the part of the spike 1 according to Figure 2. If fluid is supplied from the pipe 2 in the direction of the spike 1, the fluid in the pipe 2 will leave the latter at its end and flow out into the channel 11. The diameter of the outflow channel 11 is greater than the internal diameter of the pipe 2. That means that, owing to the greater diameter, a certain reduction in pressure can occur. From the channel 11 the fluid will leave the head 10 of the spike 1 through the outflow aperture 14. From the outflow aperture 14 the fluid will move further in the direction of the guide walls 12 and 13. The fluid leaving the outflow aperture 14 will also be guided along the wall 20 provided between the guide walls 12 and 13. By way of this guide wall 20, the fluid flows further downwards under the influence of gravity. The fluid is guided along the guide wall 20 to the end of said guide wall. An aperture 21 is kept clear at the bottom end of the guide wall. Under the influence of gravity, the fluid will fall further downwards and arrive on the knife-shaped member 22, which is fixed between the respective guide walls 12 and 13. Owing to the presence of the channel 11 that can be filled with the fluid, on the one hand, and the guide wall 20, on the other hand, the supply of fluid in the direction of the knife 22 will be constant during the use of the spike 1. In other words, there will not be any risk of fluid being supplied in the wrong way in the direction of the knife 22. Owing to the fact that the fluid is guided to the knife 22, it can be ensured that the fluid flow is split by means of the knife into two fluid flows, each moving on its own side of the knife 22. It can be ensured in this way that the fluid that is supplied by means of the pipe 2 can be distributed over a relatively large area of the substrate 3 (see Figure 1).

The guidance of the fluid in the direction of the knife can be improved further by making the spike of a material to which the fluid can readily adhere. The lower the surface resistance between the material and the fluid, the better will be the adhesion of the fluid to the material.

A retaining wall 23 is further shown in Figure 3. Said retaining wall 23 is placed substantially crosswise to the walls 12 and 13. Through the presence of said retaining wall 23, fluid moving downwards between the walls 12 and 13 is moved to the outside of the spike 1. In this way it can be ensured that the fluid is guided along the walls 12 and 13 until it reaches the first retaining wall 23 situated in the substrate 3. In this way the penetration depth at which the fluid is distributed over the substrate can be limited.

A cross section along the line A-A in Figure 3 is shown in Figure 4. Figure 3 shows clearly the function of the knife-shaped member 22. Fluid supplied upstream of the knife-shaped member 22 is supplied under the influence of the guidance of the wall 20 in such a way that the fluid flow can split into two fluid flows at the position of the knife 22. In this way it is ensured that fluid supplied can be distributed over a relatively large part of the substrate.

It can be seen in the drawings that one side wall 20 is present for guiding the fluid flow in the direction of the knife 22. It is pointed out that it is also possible for the spike to be provided with two walls 20 placed opposite each other. A further improvement of the guidance of the fluid in the direction of the knife can be achieved in this way. Furthermore, the wall 20 according to the invention is provided on the right-hand side, viewed in the direction of flow from the pipe towards the knife. It is clear that spikes in mirror image are also possible, in this case the wall 20 being placed on the left-hand side, viewed in the direction of flow from the pipe 2 towards the knife 22.

## Claims

1. Spike (1) for supplying a fluid from a pipe (2) to a nutrient medium, such as a substrate (3), which spike (1) comprises a pin-shaped body, which at a first end is provided with an aperture for attaching a pipe (2) and at the other end tapers to form a piercing element at that end, wherein the aperture for attaching the pipe (2) connects to a channel or chamber (11) for receiving fluid in said channel or chamber (11), which chamber (11) comprises an outflow aperture (14) for dispensing the fluid, wherein the body comprises guide walls (12, 13) together forming a guide channel for guiding fluid flowing out of the outflow aperture (14) of the channel or chamber (11), and wherein the spike (1) comprises a knife-shaped member (22) that is placed in the guide channel, in order to distribute fluid over the walls of the body, **characterised in that** a further guide wall (20) for guiding the fluid along it extends within the guide channel between the outflow aperture (14) of the channel or chamber (11) and the knife-shaped member (22), and **in that** said further guide wall (20) and the knife-shaped member (22) are placed with respect to each other such that the fluid flow guided to the knife-shaped member (22) by said further guide wall (20) is split by means of the knife-shaped member (22) into two fluid flows, each moving on one side of the knife-shaped member (22).

2. Spike according to claim 1, wherein said further guide wall (20) forms one of the lateral boundaries of the movement path of the fluid between the outflow aperture (14) of the channel or chamber (11) and the knife-shaped member (22), and wherein the knife-shaped member (22) is placed in the movement path of the fluid.

3. Spike according to 1 or 2, wherein an aperture (21) is kept clear at the bottom end of said further guide wall (20) such that fluid guided along said further guide wall (20) to the end of said further guide wall (20) will fall downwards under the influence of gravity and arrive on the knife-shaped member (22), which is fixed between the respective guide walls (12, 13).

4. Spike according to one of the preceding claims, **characterized in that** the guide wall connects to the wall of the outflow aperture of the channel or chamber.

5. Spike according to one of the preceding claims, **characterized in that** the body of the spike comprises a curved part, in which case the outflow aperture of the channel or chamber is situated upstream of the curved part, and the knife-shaped member is placed downstream of the curved part.

6. Spike according to Claim 5, **characterized in that** the guide wall extends over the curved part.

7. Spike according to one of the preceding claims, **characterized in that** the body is provided with guide walls, for guiding the fluid from the knife-shaped member in the direction of the piercing element.

8. Spike according to Claim 7, **characterized in that** the spike comprises retaining walls positioned crosswise, for retaining the fluid flow through the guide walls.

## Revendications

1. Pointe (1) pour l'irrigation en fluide provenant d'un tuyau (2) d' un milieu riche en nutriments, tel un substrat (3), ladite pointe (1) comprend un corps en forme d'aiguille comportant un orifice à une première extrémité pour la fixation d'un tuyau (2) et l'autre extrémité de forme conique formant un élément pénétrant, l'ouverture pour la fixation du tuyau (2) étant connectée à un canal ou une chambre (11) de façon à recevoir le fluide dans ledit canal ou ladite chambre (11), ladite chambre (11) comprenant une ouverture d'écoulement (14) pour évacuer le fluide, le corps comprenant des parois de guidage (12, 13) formant ensemble un canal de guidage pour la canalisation du fluide s'écoulant de l'ouverture d'écoulement (14) du canal ou de la chambre (11), et la pointe (1) comprenant un élément tranchant (22) placé dans le canal de guidage, de façon à répartir le fluide sur les parois du corps,
**caractérisé en ce qu'**une paroi de guidage supplémentaire (20) pour la canalisation du fluide le long de celle-ci se prolonge à l'intérieur du canal de guidage entre l'ouverture d'écoulement (14) du canal ou de la chambre (11) et l'élément tranchant (22), et **en ce que** ladite paroi de guidage supplémentaire (20) et l'élément tranchant (22) sont disposés l'un par rapport à l'autre de sorte que le flux de fluide canalisé de ladite paroi de guidage supplémentaire (20) vers l'élément tranchant (22) est séparé en deux flux de fluide au moyen de l'élément tranchant (22), chacun des flux de fluide s'écoulant sur un côté de l'élément tranchant (22).

2. Pointe selon la revendication 1, **caractérisée en ce que** ladite paroi de guidage supplémentaire (20) constitue une des limites latérales du trajet d'écoulement du fluide entre l'ouverture d'écoulement (14) du canal ou de la chambre (11) et l'élément tranchant (22), et l'élément tranchant (22) est disposé sur le trajet d'écoulement du fluide.

3. Pointe selon la revendication 1 ou 2, **caractérisée en ce que** une ouverture (21) est prévue à l'extrémité inférieure de ladite paroi de guidage supplémentaire (20) de sorte que le fluide canalisé le long de ladite paroi de guidage supplémentaire (20) vers l'extrémité de ladite paroi de guidage supplémentaire (20) tombe vers le bas sous l'influence de la gravité et arrive sur l'élément tranchant (22), qui est maintenu entre les parois de guidage (12, 13) respectives.

4. Pointe selon l'une quelconque des revendications précédentes, **caractérisée en ce que** la paroi de guidage est reliée à la paroi de l'ouverture d'écoulement du canal ou de la chambre.

5. Pointe selon l'une quelconque des revendications précédentes, **caractérisée en ce que** le corps de la pointe comprend une partie courbée, dans ce cas l'ouverture d'écoulement du canal ou de la chambre est située en amont de la partie courbée, et l'élément tranchant est situé en aval de la partie courbée.

6. Pointe selon la revendication 5, **caractérisée en ce que** la paroi de guidage se prolonge sur la partie courbée.

7. Pointe selon l'une quelconque des revendications précédentes, **caractérisée en ce que** le corps comprend des parois de guidage pour la canalisation du fluide de l'élément tranchant vers l'élément pénétrant.

8. Pointe selon la revendication 7, **caractérisée en ce que** la pointe comprend des parois de rétention positionnées en travers, de façon à retenir le flux de fluide dans les parois de guidage.

## Patentansprüche

1. Spitze (1), um einen Nährboden mit einem Fluid aus einer Leitung (2) zu versorgen, beispielsweise einem Substrat (3), wobei Spitze (1) einen nadelförmigen Körper umfasst, welcher an einem ersten Ende mit einer Öffnung versehen ist, um eine Leitung (2) zu befestigen, und an dem anderen Ende sich verjüngt, um ein Lochungselement an diesem Ende zu bilden, wobei die Öffnung zum Befestigen der Leitung (2) mit einem Kanal oder einer Kammer (11) verbunden ist, um Fluid in den Kanal oder die Kammer (11) aufzunehmen, wobei die Kammer (11) eine Ausflussöffnung (14) umfasst, um Fluid auszuleiten, wobei der Körper Führungswände (12, 13) umfasst, welche zusammen einen Führungskanal bilden, um die Fluidströmung aus der Auslassöffnung (14) des Kanals oder der Kammer (11) heraus zu leiten, und wobei die Spitze (1) ein messerförmiges Element (22) umfasst, welche in dem Führungskanal angeordnet ist, um das Fluid über die Wände des Körpers zu verteilen, **dadurch gekennzeichnet, dass** sich eine weitere Führungswand (20) innerhalb des Führungskanals zwischen der Auslassöffnung (14) des Kanals oder der Kammer (11) und dem messerförmigen Element (22) erstreckt, um das Fluid entlang derselben zu leiten, und dass die weitere Führungswand (20) und das messerförmige Element (22) derart zueinander angeordnet sind, dass die von der Führungswand (20) zu dem messerförmigen Element (22) geleitete Fluidströmung mittels des messerförmigen Elements (22) in zwei Fluidströme getrennt wird, welche sich jeweils an einer Seite des messerförmigen Elements (22) bewegen.

2. Spitze nach Anspruch 1, wobei die weitere Führungswand (20) eine der lateralen Grenzen des Bewegungsweges des Fluides zwischen der Auslassöffnung (14) des Kanals oder der Kammer (11) und dem messerförmigen Element (22) bildet, und wobei das messerförmige Element (22) in dem Bewegungsweg des Fluids angeordnet ist.

3. Spitze nach Anspruch 1 oder 2, wobei eine Öffnung (21) an dem unteren Ende der Führungswand (20) freigehalten wird, so dass Fluid, welches entlang der weiteren Führungswand (20) zu dem Ende der weiteren Führungswand (20) geleitet wird, unter dem Einfluss der Schwerkraft nach unten fällt und auf das messerförmige Element (22) trifft, welches zwischen den entsprechenden Führungswänden (12, 13) befestigt ist.

4. Spitze nach einem der vorherigen Ansprüche, **dadurch gekennzeichnet, dass** die Führungswand mit der Wand der Auslassöffnung des Kanals oder der Kammer verbunden ist.

5. Spitze nach einem der vorherigen Ansprüche, **dadurch gekennzeichnet, dass** der Körper der Spitze einen gekrümmten Abschnitt umfasst, wobei in diesem Fall die Auslassöffnung des Kanals oder der Kammer stromaufwärts des gekrümmten Abschnittes angeordnet ist, und das messerförmige Element stromabwärts des gekrümmten Abschnittes angeordnet ist.

6. Spitze nach Anspruch 5, **dadurch gekennzeichnet, dass** die Führungswand sich über den gekrümmten Abschnitt erstreckt.

7. Spitze nach einem der vorherigen Ansprüche, **dadurch gekennzeichnet, dass** der Körper mit Führungswänden versehen ist, um das Fluid von dem messerförmigen Element in Richtung des Lochungselementes zu führen.

8. Spitze nach Anspruch 7, **dadurch gekennzeichnet, dass** die Spitze Rückhaltewände umfasst, welche quer positioniert sind um die Fluidströmung durch die Führungswände zurückzuhalten.
